# EUROPEAN PATENT APPLICATION

(11) **EP 4 621 455 A1**
(43) Date of publication of application: **24.09.2025**
(21) Application number: 23891519.3
(22) Date of filing: 13.11.2023
(51) Int. Cl.: G02B 6/25

(54) **OPTICAL FIBER CUTTER**

(30) Priority: 16.11.2022 JP 2022183445
(71) Applicant: Sumitomo Electric Optifrontier Co., Ltd., Yokohama-shi, Kanagawa 244-8589 (JP)
(72) Inventor: KURINO, Shinsuke, Yokohama-shi, Kanagawa 244-8589 (JP); TODA, Yoshinobu, Yokohama-shi, Kanagawa 244-8589 (JP); JOKO, Kazufumi, Yokohama-shi, Kanagawa 244-8589 (JP)
(74) Representative: Müller-Boré & Partner Patentanwälte PartG mbB
(86) International application number: PCT/JP2023/040722
(87) International publication number: WO 2024/106372

(57) **Abstract**

An optical fiber cutter according to one embodiment of the present invention comprises: a blade that makes a cut in an optical fiber; a recovery unit that recovers cutting scraps of the optical fiber which has been severed starting from the cut; and an open/close member that rotates around a first axis in a first rotation direction to thereby open the recovery unit. The optical fiber cutter further comprises: a moving member that moves along a first direction; and a rotation member that, as the moving member moves in the first direction, rotates around a second axis in a second rotation direction which is a reverse direction of the first rotation direction, thereby causing the open/close member to rotate in the first rotation direction.

## Description

### TECHNICAL FIELD

The present disclosure relates to an optical fiber cutter. This application claims priority from Japanese Patent Application No. 2022-183445 filed on November 16, 2022, the entire contents of which are incorporated herein by reference.

### BACKGROUND ART

Patent literature 1 describes an optical fiber cutter. The optical fiber cutter has a main body, a clamp for holding the bare optical fiber, a disc-shaped blade portion for scratching the bare optical fiber, and a scrap collection mechanism for collecting scraps of the bare optical fiber. The scrap collection mechanism has a case body, an inner case accommodated in the case body, an opening-closing lid that can be opened and closed with respect to an opening at an upper portion of the case body, and an opening-closing lock lever that locks the opening-closing lid in an open state. The opening-closing lid is a plate-like body attached to a rear end of an upper surface of the case body. A bearing through which a support shaft formed at a rear end of the case body is inserted is formed at a rear end of the opening-closing lid. The support shaft of the case body is inserted into the bearing of the opening-closing lid, whereby the opening-closing lid can be opened and closed with respect to the case body.

Patent literature 2 describes an optical fiber core wire scrap collection apparatus. The optical fiber core wire scrap collection apparatus includes a frame body connected to a cutting machine for cutting an optical fiber and storing scraps, a holding roller provided in an adjacent locate of the frame body, and a moving roller provided in a lower end portion of the frame body. The holding roller has an upper roller and a lower roller that hold the core wire scrap of the optical fiber protruding from the cutting machine. The moving roller rotates by the movement of the frame body, whereby the core wire scrap interposed between the upper roller and the lower roller is fed into the frame body.

Patent literature 3 describes a scrap collector for an optical fiber cutter. The scrap collector has a scrap receptacle. The scrap receptacle has a scrap receptacle main body and a lid connected to the scrap receptacle main body via a hinge. Further, the scrap collector has an optical fiber feeding mechanism at a location close to the optical fiber cutter. The optical fiber feeding mechanism has a lower roller attached to the scrap receptacle main body via a roller holding mechanism and an upper roller attached to the lid. The optical fiber scrap is fed into the scrap receptacle by the lower roller and the upper roller.

### CITATION LIST

### PATENT LITERATURE

Patent literature 1: WO 2022/181766
Patent literature 2: Japanese Unexamined Patent Application Publication No. 2006-43788
Patent literature 3: Japanese Unexamined Patent Application Publication No. 2012-73375

### SUMMARY OF INVENTION

An optical fiber cutter according to the present disclosure includes a blade configured to make a scratch on an optical fiber, a collection portion in which scrap of the optical fiber cut at the scratch as a starting point is to be collected, an opening-closing member configured to open the collection portion by rotating about a first shaft in a first rotation direction. The optical fiber cutter further includes a moving member configured to move along a first direction, and a rotary member configured to rotate the opening-closing member in the first rotation direction by being rotated about a second shaft in a second rotation direction opposite to the first rotation direction by the moving member moving in the first direction.

### BRIEF DESCRIPTION OF THE DRAWINGS

FIG. 1 is a perspective view showing an optical fiber cutter according to an embodiment.
FIG. 2 is a perspective view showing a collection portion and an opening-closing member of the optical fiber cutter of FIG. 1.
FIG. 3 is a perspective view showing a state in which the collection portion of FIG. 2 is pulled out from the optical fiber cutter of FIG. 1.
FIG. 4 is a perspective view showing a state in which the opening-closing member of FIG. 2 closes the collection portion.
FIG. 5 is a perspective view showing a moving member, a rotary member, and the opening-closing member of the optical fiber cutter shown in FIG. 1.
FIG. 6 is a perspective view showing a state in which the opening-closing member of FIG. 5 opens a collection portion.
FIG. 7 is a side view showing the moving member and the rotary member of FIG. 5.

### DETAILED DESCRIPTION

In the collection portion for collecting the scrap of the optical fiber, it may be smoothly open and close the opening-closing member such as a lid for opening and closing the collection portion. For example, in the opening and closing of the opening-closing member, a large resistance may be generated, and thus there is a possibility that the opening-closing member cannot be smoothly opened and closed.

It is an object of the present disclosure to provide an optical fiber cutter equipped with a collection portion that is opened and closed smoothly for collecting a scrap of the optical fiber.

### [Description of Embodiments of the Present Invention]

Hereinafter, embodiments of an optical fiber according to the present embodiment will be described. (1) An optical fiber cutter according to the present disclosure includes a blade configured to make a scratch on an optical fiber, a collection portion in which scrap of the optical fiber cut at the scratch as a starting point is to be collected, an opening-closing member configured to open the collection portion by rotating about a first shaft in a first rotation direction. The optical fiber cutter further includes a moving member configured to move along a first direction, and a rotary member configured to rotate the opening-closing member in the first rotation direction by being rotated about a second shaft in a second rotation direction opposite to the first rotation direction by the moving member moving in the first direction.

The optical fiber cutter has the collection portion in which scrap of the optical fiber cut is to be collected, and the opening-closing member configured to open the collection portion by rotating about the first shaft in the first rotation direction. Further, the optical fiber cutter has the moving member configured to move in the first direction and the rotary member configured to rotate about the second shaft in the second rotation direction opposite to the first rotation direction. When the moving member moves in the first direction, the rotary member rotates in the second rotation direction, thereby rotating the opening-closing member in the first rotation direction. Thus, the collection portion can be opened by pushing the moving member to rotate the opening-closing member in the first rotation direction. The rotary member converts the movement of the moving member in the first direction into the rotation of the opening-closing member in the first rotation direction, thereby allowing the opening-closing member to be opened and closed smoothly. Thus, the opening-closing member can be smoothly opened and closed while suppressing the generation of a large resistance.

(2) In the above (1), the moving member may have an inclined surface with which the rotary member comes into contact. The inclined surface may be inclined to become further away from the second shaft as the inclined surface extends in the first direction. The rotary member may rotate about the second shaft in the second rotation direction by, in a state of being in contact with the inclined surface, relatively moving in a direction opposite to the first direction. In this case, the rotary member in contact with the inclined surface of the moving member relatively moves in a direction opposite to the first direction with respect to the moving member, thereby rotating in the second rotation direction. Thus, the configuration for converting the movement in the first direction into the rotation in the second rotation direction can be simplified.

(3) In the above (2), the rotary member and the opening-closing member may be arranged side by side in a second direction intersecting the first direction. The inclined surface may be inclined with respect to the second direction to become further away from the second shaft as the inclined surface extends in the second direction.

(4) In the above (3), the second direction may be a direction from a lower location toward an upper location.

(5) In any one of the above (1) to (4), when the moving member is pressed, the blade cuts the optical fiber, the opening-closing member may swing upward, and the collection portion may be set to an open state to allow scrap of the optical fiber to enter the collection portion.

(6) In any one of the above (1) to (5), the moving member may have a guide rail extending along the first direction, the moving member may move along the guide rail, and a force point of the rotary member may be located above a center of the guide rail.

(7) In any one of the above (2) to (4), the inclined surface may be inclined to become closer to the rotary member as the inclined surface extends in a direction opposite to the first direction.

(8) In any one of the above (1) to (7), the moving member may have an inclined surface with which the rotary member comes into contact. The rotary member may have a curved surface curved to come into contact with the inclined surface and to extend along the second rotation direction. In this case, since the curved surface of the rotary member that comes into contact with the inclined surface of the moving member is curved and extends along the second rotation direction, the force can be more smoothly converted from the first direction to the second rotation direction.

(9) In any one of the above (1) to (8), the rotary member may have a contact surface with which the opening-closing member comes into contact. The opening-closing member may have a contact portion in a shape of a curved surface and configured to come into contact with the contact surface. In this case, the contact portion of the opening-closing member, which comes into contact with the contact surface of the rotary member, is a shape of a curved surface. Thus, the driving force can be more smoothly transmitted from the rotary member to the opening-closing member, and thus the opening and closing of the collection portion by the opening-closing member can be more smoothly performed.

(10) In the above (9), the rotary member may have an arm, a second shaft located at an end portion of the arm opposite to the contact portion, and a holding portion, the arm being configured to come into contact with the contact portion, the holding portion being configured to hold the second shaft.

(11) In the above (9) or (10), the contact portion may be configured to be movable along the contact surface.

(12) In the above (10), the arm may extend from the second shaft in an extension direction toward the contact portion, and a cross-sectional shape of the arm when the arm is cut along a plane orthogonal to the extension direction may be an L-shape.

(13) In any one of the above (9) to (12), when the rotary member rotates in the second rotation direction, the contact portion in contact with the contact surface may perform a relative movement obliquely downward with respect to the contact surface, and the opening-closing member may be rotated in the first rotation direction by the relative movement.

(14) In any one of the above (1) to (13), the opening-closing member may have a lid portion extending from the first shaft toward the blade, and an extension portion extending from the first shaft toward the rotary member and configured to receive a driving force in the first rotation direction from the rotary member. In this case, a driving force in the first rotation direction is received by the extension portion, thereby allowing the lid portion can be rotated about the first shaft in the first rotation direction.

(15) In the above (14), the optical fiber cutter may include a fiber holding portion configured to hold the optical fiber. The lid portion may extend from the fiber holding portion in a direction away from the blade.

(16) In the above (15), the fiber holding portion may be rotatably held by an end portion of the lid portion.

(17) In the above (15) or (16), a part of the lid portion, the part holding the fiber holding portion, may be bent obliquely downward.

(18) In any one of the above (14) to (17), the collection portion may be opened by the lid portion being raised obliquely upward with respect to the first shaft.

### [Details of Embodiments of Present Disclosure]

Specific examples of an optical fiber cutter according to an embodiment will be described below with reference to the drawings. The present invention is not limited to the following examples, but is intended to include all modifications within the scope of the claims and equivalents thereof. In the description of the drawings, the same or corresponding elements are denoted by the same reference numerals, and redundant description will be appropriately omitted. In the drawings, some components may be simplified or exaggerated for easy understanding, and the dimensional ratios and the like are not limited to those shown in the drawings.

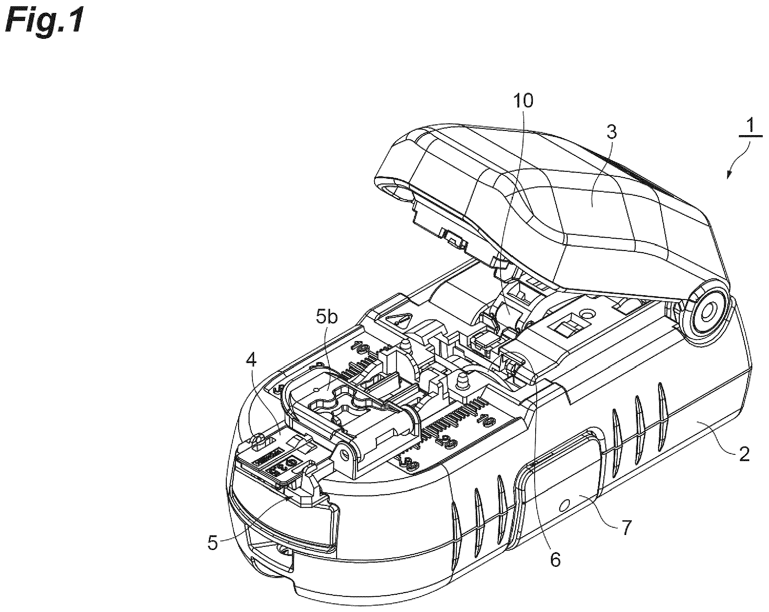

FIG. 1 is a perspective view showing an optical fiber cutter 1 according to an embodiment. Optical fiber cutter 1 is a device that cuts a glass fiber exposed by removing a coating of a tip end portion of the optical fiber, for example. For example, optical fiber cutter 1 has a substrate 2, a cover 3, a guide member 4, a base member 5, a blade 6 to make a scratch on the optical fiber, a moving member 7, and a fiber holding portion 10. Cover 3 is configured to be openable and closable with respect to substrate 2. Cover 3 is connected to be rotatable, for example, via the shaft extending along a width direction of substrate 2 at an end portion of substrate 2.

Guide member 4 and base member 5 constitute an optical fiber holder for holding an optical fiber to be scratched by blade 6. Base member 5 has a cover 5b that covers the optical fiber guided by guide member 4. Blade 6 is provided make a scratch on the optical fiber. For example, blade 6 has a disk shape. Moving member 7 is provided on a side surface of substrate 2 facing the width direction of substrate 2. Moving member 7 is movable in the width direction of substrate 2. Blade 6 rotates by moving member 7 moving. Fiber holding portion 10 holds an end portion of the optical fiber guided by guide member 4. The optical fiber held by fiber holding portion 10 is scratched and cut by blade 6 which rotates by moving member 7 moving.

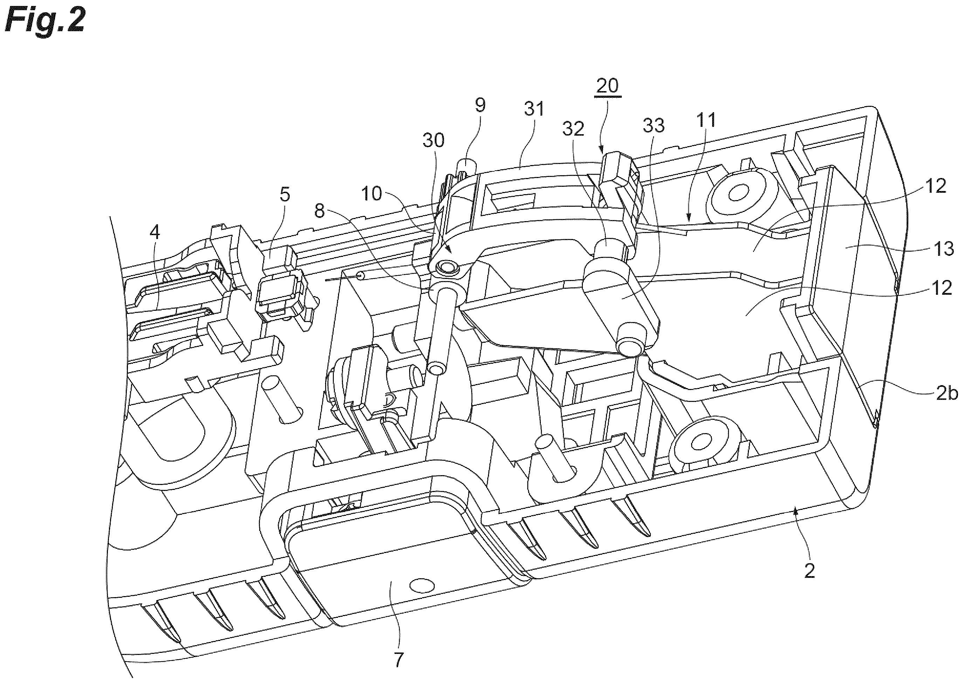

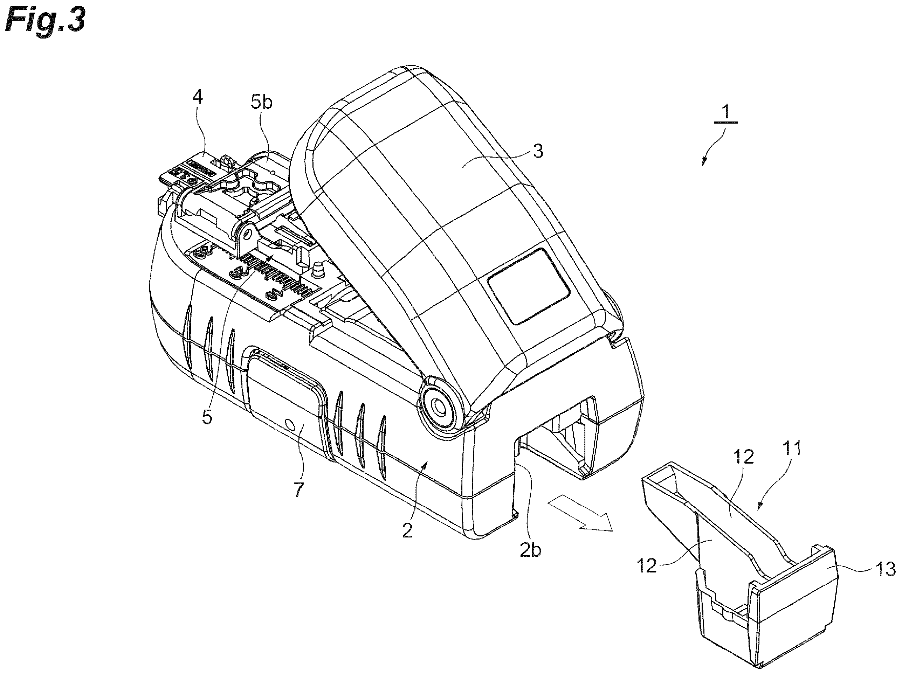

FIG. 2 is a perspective view showing a structure around fiber holding portion 10. FIG. 3 is a perspective view of optical fiber cutter 1 as viewed from a direction different from that of FIG. 1. As shown in FIG. 2 and FIG. 3, optical fiber cutter 1 has a rotation shaft 9 and a roller 8 fixed to rotation shaft 9. For example, roller 8 is configured to be rotatable about rotation shaft 9. Fiber holding portion 10 holds the optical fiber, for example, by interposing the optical fiber together with roller 8. As an example, fiber holding portion 10 is made of metal.

Optical fiber cutter 1 has a collection portion 11 for collecting cut scrap of the optical fiber. Collection portion 11 is configured to be detachable from an opening 2b formed in the end portion of substrate 2. Collection portion 11 has, for example, a pair of side wall portions 12 arranged along the width direction of substrate 2, and a connection wall portion 13 connecting the pair of side wall portions 12 to each other. Collection portion 11 is configured to be removable from substrate 2 by pulling out connection wall portion 13.

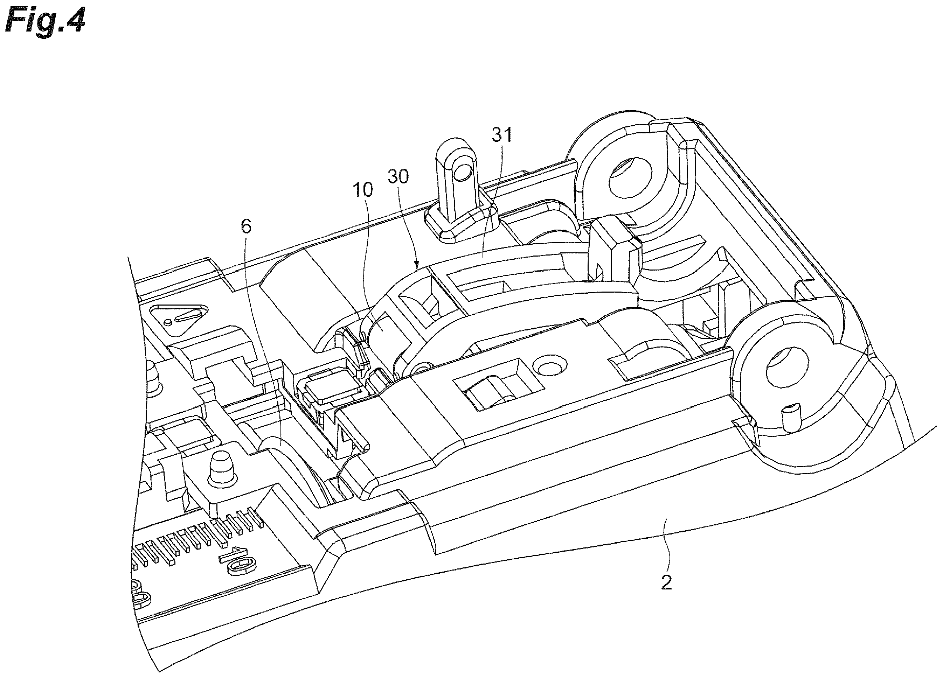

FIG. 4 is a perspective view showing an opening-closing member 30 for opening and closing collection portion 11. As shown in FIG. 2 and FIG. 4, opening-closing member 30 for opening and closing collection portion 11 extends from fiber holding portion 10. Opening-closing member 30 is exposed on an upper surface of substrate 2. For example, opening-closing member 30 opens collection portion 11 by swinging upward, and closes collection portion 11 by swinging downward.

As will be described later, opening-closing member 30 opens and closes collection portion 11 in conjunction with movement of moving member 7. Opening-closing member 30 is biased in a direction (for example, downward) in which collection portion 11 is closed by a spring member (not shown) built in substrate 2. When moving member 7 is pressed, blade 6 cuts the optical fiber, opening-closing member 30 swings upward, and scrap of the optical fiber enters collection portion 11 in a state where collection portion 11 is opened.

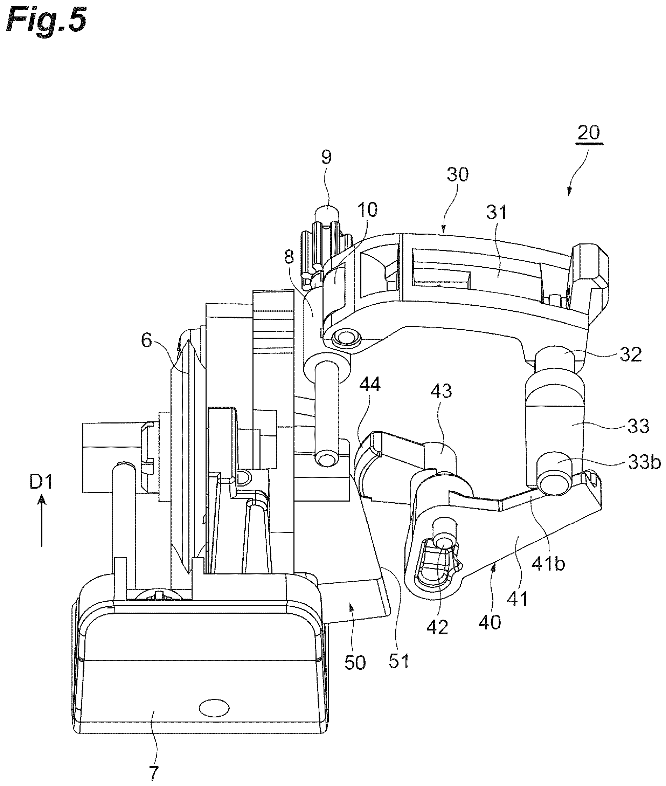

FIG. 5 is a perspective view showing moving member 7 and opening-closing member 30. As shown in FIG. 5, optical fiber cutter 1 has a swing mechanism 20 for swinging opening-closing member 30. Swing mechanism 20 includes opening-closing member 30, a rotary member 40 for rotating opening-closing member 30, and a driving portion 50 for rotating rotary member 40. In the following description, the direction in which moving member 7 is pressed is referred to as a first direction D1. That is, moving member 7 is pushed in first direction D1 and moves along first direction D1.

For example, opening-closing member 30 has a lid portion 31 that serves as a lid of collection portion 11, a first shaft 32 located at an end portion of lid portion 31 opposite to fiber holding portion 10, and an extension portion 33 that extends from first shaft 32 toward rotary member 40. For example, lid portion 31 extends from fiber holding portion 10 in a direction away from blade 6. Fiber holding portion 10 is rotatably held by an end portion of lid portion 31. Lid portion 31 extends from first shaft 32 toward blade 6. For example, a part of lid portion 31 that holds fiber holding portion 10 is bent obliquely downward. Fiber holding portion 10 is held by the bent part of lid portion 31.

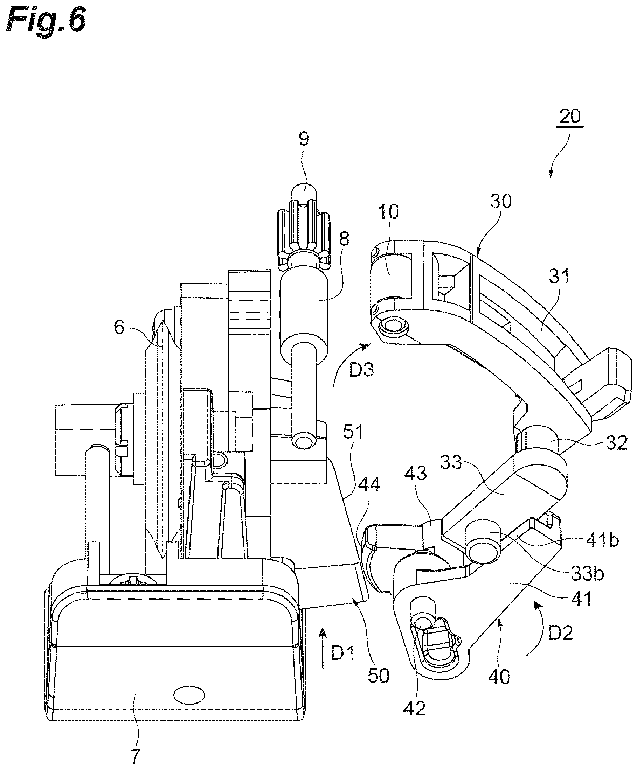

FIG. 6 is a view showing a state in which opening-closing member 30 is rotated to open collection portion 11. As shown in FIG. 5 and FIG. 6, first shaft 32 extends along first direction D1. First shaft 32 has a cylindrical shape. First shaft 32 protrudes from a part of lid portion 31, which is further away from fiber holding portion 10 in a direction opposite to first direction D1. Opening-closing member 30 opens collection portion 11 by being rotated about first shaft 32 in a first rotation direction D3.

Extension portion 33 is a portion that receives a driving force in first rotation direction D3. Extension portion 33, first shaft 32, and lid portion 31 are arranged in this order along first direction D1. Extension portion 33 has a contact portion 33b at a location further away from first shaft 32. Contact portion 33b is a portion that comes into contact with rotary member 40. For example, contact portion 33b is located below or obliquely below first shaft 32. Contact portion 33b is a shape of a curved surface. For example, contact portion 33b is a curved surface that is a circular shape when viewed along first direction D1. For example, contact portion 33b is an outer circumferential surface of a cylindrical portion protruding in a direction opposite to first shaft 32 in extension portion 33 has been described.

Rotary member 40 is a component for rotating opening-closing member 30 in first rotation direction D3. Rotary member 40 has an arm 41 that comes into contact with contact portion 33b, a second shaft 42 that is located at an end portion of arm 41 opposite to contact portion 33b and a holding portion 43 that holds second shaft 42. Arm 41 has a contact surface 41b with which opening-closing member 30 comes into contact. Contact portion 33b of opening-closing member 30 is configured to be movable along contact surface 41b.

Arm 41 extends from second shaft 42 toward contact portion 33b. A cross-sectional shape of arm 41 when arm 41 is cut along a plane orthogonal to the extension direction is, for example, an L-shape. An upper surface of the L-shape serves as contact surface 41b. For example, extension portion 33 enters the inside of the L-shape in a state in which contact portion 33b is in contact with contact surface 41b. Thus, the rotational force in first rotation direction D3 can be smoothly transmitted to opening-closing member 30 through contact surface 41b and contact portion 33b.

Second shaft 42 extends along first direction D1. Rotary member 40 rotates about second shaft 42 in a second rotation direction D2 which is a direction opposite to first rotation direction D3, thereby causing opening-closing member 30 to rotate about first shaft 32 in first rotation direction D3. For example, second shaft 42 penetrates arm 41 in first direction D1. Second shaft 42 which penetrates arm 41 is held by holding portion 43. Holding portion 43 has, for example, a cylindrical shape extending from below second shaft 42 along first direction D1. Holding portion 43 has a curved surface 44 which comes into contact with driving portion 50. Holding portion 43 has a protrusion portion protruding toward moving member 7, and curved surface 44 is formed at a protruding end of the protrusion portion.

Driving portion 50 is, for example, a part of moving member 7. Driving portion 50 is provided at a location facing rotary member 40 in moving member 7. For example, driving portion 50 is provided below roller 8 and rotation shaft 9. Driving portion 50 has an inclined surface 51 with which rotary member 40 comes into contact. Inclined surface 51 is inclined to become further away from second shaft 42 as it extends in first direction D1. Inclined surface 51 is inclined to become closer to rotary member 40 as it extends in a direction opposite to first direction D1. Inclined surface 51 comes in contact with curved surface 44 of rotary member 40. When viewed along first direction D1, curved surface 44 is curved in an arc shape. For example, curved surface 44 is curved along second rotation direction D2.

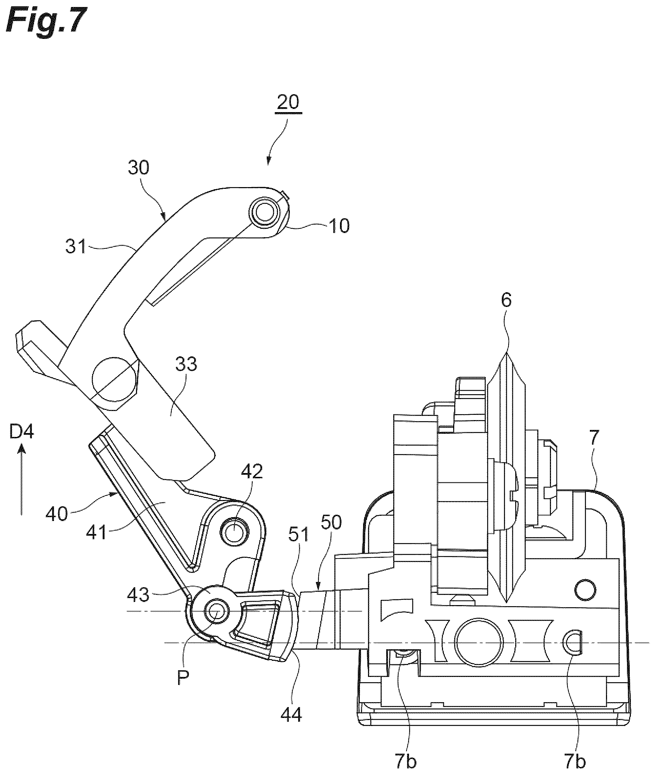

FIG. 7 is a side view of swing mechanism 20 and moving member 7 when swing mechanism 20 is viewed from a direction opposite to that of FIG. 5 and FIG. 6. As shown in FIG. 7, rotary member 40 and opening-closing member 30 are arranged side by side in this order along a second direction D4. Second direction D4 is, for example, a direction from a lower location toward an upper location. Inclined surface 51 of driving portion 50 is inclined from second direction D4 to become further away from second shaft 42 as it extends in second direction D4. Inclined surface 51 is inclined so as to protrude toward rotary member 40 as it extends downward. For example, moving member 7 has a pair of guide rails 7b extending along first direction D1. For example, the pair of guide rails 7b are arranged along the horizontal direction, and each guide rail 7b has a round bar shape. Moving member 7 moves along the pair of guide rails 7b. For example, a force point P of rotary member 40 is located above the center of each guide rail 7b.

The operation of swing mechanism 20 configured as described above will be described. In swing mechanism 20, when moving member 7 is pushed in along first direction D1, rotary member 40 rotates about second shaft 42 in second rotation direction D2. Rotary member 40 rotates about second shaft 42 in second rotation direction D2 opposite to first rotation direction D3 by moving member 7 moving in first direction D1. More specifically, rotary member 40 relatively moves to moving member 7 in the direction opposite to first direction D1 while in contact with inclined surface 51, thereby rotating in second rotation direction D2 about second shaft 42. At this time, curved surface 44 in contact with inclined surface 51 performs a relative movement in the direction opposite to first direction D1, and rotates in second rotation direction D2.

When rotary member 40 rotates in second rotation direction D2, contact portion 33b in contact with contact surface 41b of rotary member 40 performs a relative movement obliquely downward with respect to contact surface 41b. Opening-closing member 30 rotates about first shaft 32 in first rotation direction D3 by the relative movement. By the rotation, fiber holding portion 10 moves upward and collection portion 11 is opened by lid portion 31 being raised obliquely upward with respect to first shaft 32.

The effects obtained from optical fiber cutter 1 according to the embodiment will be described. Optical fiber cutter 1 has collection portion 11 in which scrap of the optical fiber cut by blade 6 is to be collected, and opening-closing member 30 configured to open collection portion 11 by rotating about first shaft 32 in first rotation direction D3. Further, optical fiber cutter 1 has moving member 7 configured to move in first direction D1 and rotary member 40 configured to rotate about second shaft 42 in second rotation direction D2 opposite to first rotation direction D3. When opening-closing member 30 is pushed in first direction D1, rotary member 40 rotates in second rotation direction D2, thereby rotating opening-closing member 30 in first rotation direction D3. Thus, collection portion 11 can be opened by pushing moving member 7 to rotate opening-closing member 30 in first rotation direction D3. Rotary member 40 converts the movement of moving member 7 in first direction D1 into the rotation of opening-closing member 30 in first rotation direction D3, thereby allowing opening-closing member 30 to be opened and closed smoothly. Thus, opening-closing member 30 can be smoothly opened and closed while suppressing the generation of a large resistance.

As described above, moving member 7 may have inclined surface 51 with which rotary member 40 comes into contact. Inclined surface 51 may be inclined to become further away from second shaft 42 as it extends in first direction D1. Rotary member 40 may rotate about second shaft 42 in second rotation direction D2 by relatively moving in the direction opposite to first direction D1 while in contact with inclined surface 51. In this case, rotary member 40 in contact with inclined surface 51 of moving member 7 relatively moves in the direction opposite to first direction D1 with respect to moving member 7, thereby rotating in second rotation direction D2. Thus, the configuration for converting the movement in first direction D1 into the rotation in second rotation direction D2 can be simplified.

As described above, rotary member 40 and opening-closing member 30 may be arranged side by side in this order in second direction D4 intersecting first direction D1. Inclined surface 51 may be inclined with respect to second direction D4 to become further away from second shaft 42 as it extends in second direction D4.

As described above, moving member 7 may have inclined surface 51 with which rotary member 40 comes into contact. Rotary member 40 may have curved surface 44 curved to come into contact with inclined surface 51 and to extend along second rotation direction D2. In this case, since curved surface 44 of rotary member 40 that comes into contact with inclined surface 51 of moving member 7 is curved and extends along second rotation direction D2, the force can be more smoothly converted from first direction D1 to second rotation direction D2.

As described above, rotary member 40 may have contact surface 41b with which opening-closing member 30 comes into contact. Opening-closing member 30 may have contact portion 33b in a shape of a curved surface and configured to come into contact with contact surface 41b. In this case, contact portion 33b of opening-closing member 30, which comes into contact with contact surface 41b of rotary member 40, is a shape of a curved surface. Thus, the driving force can be more smoothly transmitted from rotary member 40 to opening-closing member 30, and thus the opening and closing of collection portion 11 by opening-closing member 30 can be more smoothly performed.

As described above, opening-closing member 30 may have lid portion 31 extending from first shaft 32 toward blade 6, and extension portion 33 extending from first shaft 32 toward rotary member 40 and configured to receive the driving force in first rotation direction D3 from rotary member 40. In this case, the driving force in first rotation direction D3 is received by extension portion 33, thereby allowing lid portion 31 can be rotated about first shaft 32 in first rotation direction D3.

The embodiments of the optical fiber cutter according to the present disclosure have been described above. However, the present invention is not limited to the embodiments described above. That is, it is easily recognized by those skilled in the art that various modifications and changes can be made within the scope of the gist described in the claims. For example, the shape, size, material, number, and arrangement of each part of the optical fiber cutter can be appropriately changed within the scope of the above description.

For example, in the above embodiment, opening-closing member 30 including contact portion 33b which is the outer circumferential surface of the cylindrical portion protruding in the direction opposite to first shaft 32 in extension portion 33 has been described. However, the shape of the contact portion of the opening-closing member does not have to be the outer circumferential surface of the cylindrical portion, and can be appropriately changed. In the above embodiment, rotary member 40 having curved surface 44 curved in an arc shape has been described. However, the curved surface may be a shape other than an arc shape, such as a parabolic shape.

In the above embodiment, driving portion 50 having inclined surface 51 inclined to become further away from second shaft 42 as it extends in first direction D1 and inclined from second direction D4 to become further away from second shaft 42 as it extends in second direction D4 has been described. However, the inclined surface of driving portion 50 may have a shape that is not inclined to become further away from second shaft 42 as it extends in first direction D1. Further, the inclined surface of driving portion 50 may have a shape that is not inclined to become further away from second shaft 42 as it extends in second direction D4. Furthermore, a part with which rotary member 40 is in contact may be a part other than the inclined surface. In this case, rotary member 40 can be rotated in second rotation direction D2 and opening-closing member 30 can be rotated in first rotation direction D3 by a configuration other than the inclined surface. Thus, inclined surface 51 may be omitted.

### REFERENCE SIGNS LIST

1 optical fiber cutter
2 substrate
2b opening
3 cover
4 guide member
5 base member
5b cover
6 blade
7 moving member
7b guide rail
8 roller
9 rotation shaft
10 fiber holding portion
11 collection portion
12 side wall portion
13 connection wall portion
20 swing mechanism
30 opening-closing member
31 lid portion
32 first shaft
33 extension portion
33b contact portion
40 rotary member
41 arm
41b contact surface
42 second shaft
43 holding portion
44 curved surface
50 driving portion
51 inclined surface
D1 first direction
D2 second rotation direction
D3 first rotation direction
D4 second direction
P force point

## Claims

1. An optical fiber cutter comprising:
a blade configured to make a scratch on an optical fiber;
a collection portion in which scrap of the optical fiber cut at the scratch as a starting point is to be collected;
an opening-closing member configured to open the collection portion by rotating about a first shaft in a first rotation direction;
a moving member configured to move along a first direction; and
a rotary member configured to rotate the opening-closing member in the first rotation direction by being rotated about a second shaft in a second rotation direction opposite to the first rotation direction by the moving member moving in the first direction.

2. The optical fiber cutter according to claim 1,
wherein the moving member has an inclined surface with which the rotary member comes into contact,
wherein the inclined surface is inclined to become further away from the second shaft as the inclined surface extends in the first direction, and
wherein the rotary member rotates about the second shaft in the second rotation direction by, in a state of being in contact with the inclined surface, relatively moving in a direction opposite to the first direction.

3. The optical fiber cutter according to claim 2,
wherein the rotary member and the opening-closing member are arranged side by side in a second direction intersecting the first direction, and
wherein the inclined surface is inclined with respect to the second direction to become further away from the second shaft as the inclined surface extends in the second direction.

4. The optical fiber cutter according to claim 3,
wherein the second direction is a direction from a lower location toward an upper location.

5. The optical fiber cutter according to any one of claim 1 to claim 4,
wherein, when the moving member is pressed, the blade cuts the optical fiber, the opening-closing member swings upward, and the collection portion is set to an open state to allow scrap of the optical fiber to enter the collection portion.

6. The optical fiber cutter according to any one of claim 1 to claim 5,
wherein the moving member has a guide rail extending along the first direction, the moving member moves along the guide rail, and a force point of the rotary member is located above a center of the guide rail.

7. The optical fiber cutter according to any one of claim 2 to claim 4,
wherein the inclined surface is inclined to become closer to the rotary member as the inclined surface extends in a direction opposite to the first direction.

8. The optical fiber cutter according to any one of claim 1 to claim 7,
wherein the moving member has an inclined surface with which the rotary member comes into contact, and
wherein the rotary member has a curved surface curved to come into contact with the inclined surface and to extend along the second rotation direction.

9. The optical fiber cutter according to any one of claim 1 to claim 8,
wherein the rotary member has a contact surface with which the opening-closing member comes into contact, and
wherein the opening-closing member has a contact portion in a shape of a curved surface and configured to come into contact with the contact surface.

10. The optical fiber cutter according to claim 9,
wherein the rotary member has an arm, a second shaft located at an end portion of the arm opposite to the contact portion, and a holding portion, the arm being configured to come into contact with the contact portion, the holding portion being configured to hold the second shaft.

11. The optical fiber cutter according to claim 9 or claim 10,
wherein the contact portion is configured to be movable along the contact surface.

12. The optical fiber cutter according to claim 10,
wherein the arm extends from the second shaft in an extension direction toward the contact portion, and a cross-sectional shape of the arm when the arm is cut along a plane orthogonal to the extension direction is an L-shape.

13. The optical fiber cutter according to any one of claim 9 to claim 12,
wherein, when the rotary member rotates in the second rotation direction, the contact portion in contact with the contact surface performs a relative movement obliquely downward with respect to the contact surface, and the opening-closing member is rotated in the first rotation direction by the relative movement.

14. The optical fiber cutter according to any one of claim 1 to claim 13,
wherein the opening-closing member has a lid portion extending from the first shaft toward the blade, and an extension portion extending from the first shaft toward the rotary member and configured to receive a driving force in the first rotation direction from the rotary member.

15. The optical fiber cutter according to claim 14, comprising
a fiber holding portion configured to hold the optical fiber,
wherein the lid portion extends from the fiber holding portion in a direction away from the blade.

16. The optical fiber cutter according to claim 15,
wherein the fiber holding portion is rotatably held by an end portion of the lid portion.

17. The optical fiber cutter according to claim 15 or claim 16,
wherein a part of the lid portion, the part holding the fiber holding portion, is bent obliquely downward.

18. The optical fiber cutter according to any one of claim 14 to claim 17,
wherein the collection portion is opened by the lid portion being raised obliquely upward with respect to the first shaft.
